# EUROPEAN PATENT APPLICATION

(11) **EP 4 681 909 A1**
(43) Date of publication of application: **21.01.2026**
(21) Application number: 25189016.6
(22) Date of filing: 11.07.2025
(51) Int. Cl.: B29C 65/02, B29C 65/48, C08L 23/12, B29K 105/00, B29L 31/00, B29C 65/06, B29C 65/14, B29C 65/20

(54) **RESIN COMPOSITION FOR WELDING, MOLDED BODY CONTAINING RESIN COMPOSITION FOR WELDING, AND METHOD FOR PRODUCING MOLDED BODY**

(30) Priority: 18.07.2024 JP 2024114512
(71) Applicant: AISIN CORPORATION, Aichi 448-8650 (JP)
(72) Inventor: TAJIMA, Kiyoshi, Kariya, 448-8650 (JP); ISHIDA, Masashi, Kariya, 448-8650 (JP); IKEGAMI, Ryo, Kariya, 448-8650 (JP)
(74) Representative: Winter, Brandl - Partnerschaft mbB

(57) **Abstract**

A resin composition for welding contains a thermoplastic resin containing a polypropylene, a glass fibre, and an antioxidant, wherein the resin composition has an oxidation induction time of 30 minutes or longer at 230°C.

Preferably, the thermoplastic resin is a recycled material.

Advantageously, two moulded members, made entirely of the resin composition or having portions-to-be-welded made thereof, are thermally welded to each other.

## Description

### TECHNICAL FIELD

This disclosure relates to a resin composition for welding, a molded body containing a resin composition for welding, and a method for producing a molded body.

### BACKGROUND DISCUSSION

In the related art, there is known a resin composition having improved strength or heat resistance by adding a glass fiber or an antioxidant to a thermoplastic resin (for example, see JP 2014-177117A (Reference 1)).

Reference 1 describes a molded body made of a resin composition in which a glass fiber and an antioxidant are added to a thermoplastic resin such as a polyamide. The molded body is joined by stamping molded members made of the resin composition using a pressing machine.

In the molded body described in Reference 1, the heat resistance is improved, but a creep life and the like are not mentioned. Therefore, when the molded members made of the resin composition as in Reference 1 are thermally welded to each other, there is a problem that strength and creep life of a welded portion decrease due to thermal degradation of a welded surface and the vicinity of the welded surface.

A need thus exists for a resin composition for welding that is less likely to degrade even when subjected to a thermal load.

### SUMMARY

According to an aspect of this disclosure, a resin composition for welding contains a thermoplastic resin containing a polypropylene, a glass fiber, and an antioxidant, in which the resin composition has an oxidation induction time of 30 minutes or longer at 230°C.

According to this configuration, strength of the resin composition for welding is improved by the glass fiber, and oxidative degradation of the resin composition for welding is prevented by the antioxidant. Since the oxidation induction time at 230°C is 30 minutes or longer, even when the resin composition for welding is placed in a high-temperature environment and subjected to a thermal load, the strength or a creep life thereof is less likely to decrease. Therefore, a resin composition for welding that is less likely to degrade even when subjected to a thermal load can be provided.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is an exploded perspective view of a cooling module;
FIG. 2 is a cross-sectional view of the cooling module;
FIG. 3 illustrates results of differential scanning calorimetry at 210°C according to Example and Comparative Example;
FIG. 4 illustrates results of differential scanning calorimetry at 230°C according to Example and Comparative Example;
FIG. 5 illustrates results of differential scanning calorimetry at 250°C according to Example and Comparative Example; and
FIG. 6 is a graph illustrating measurement temperatures and oxidation induction times according to Example and Comparative Example.

### DETAILED DESCRIPTION

Hereinafter, embodiments of a resin composition for welding, a molded body containing a resin composition for welding, and a method for producing a molded body disclosed here will be described with reference to the drawings. In the present embodiment, description will be made using a cooling module as an example of the molded body containing the resin composition for welding (hereinafter, referred to as a resin composition). However, this disclosure is not limited to the following embodiments, and various modifications can be made without departing from the gist of this disclosure.

### Resin Composition

The resin composition disclosed here contains a thermoplastic resin containing a polypropylene. The resin composition may contain a resin such as a polyethylene, a polyester, or a polyamide in addition to the polypropylene. The thermoplastic resin may be a virgin resin derived from petroleum, a recycled resin obtained from a waste material, or a mixture of the virgin resin and the recycled resin. The waste material is, for example, a waste plastic such as a defective molded product or a waste plastic collected from the market. When the thermoplastic resin is made of the waste material, a production cost of the resin composition can be reduced, and an environmental load can also be reduced. A mixing ratio of the virgin resin and the recycled resin can be set to any value, but from a viewpoint of reducing the environmental load, it is preferable to set a mixing ratio of the recycled resin as high as possible, and the thermoplastic resin is most preferably the recycled resin.

In addition, the resin composition disclosed here contains a glass fiber. A type of the glass fiber is not particularly limited, and any glass fiber made of E glass, A glass, or C glass can be used. In addition, these types of glass may be used in combination. The glass fiber disclosed here is not particularly limited, and an average fiber diameter of the glass fiber is preferably 1 µm to 50 µm, and more preferably 5 µm to 20 µm.

The glass fiber is contained in the resin composition in an amount of preferably 15% or more and 55% or less, and more preferably 20% or more and 40% or less. When the glass fiber is contained in the resin composition, mechanical strength of the resin composition can be improved.

In addition, the resin composition disclosed here contains an antioxidant. As the antioxidant, for example, a hindered phenol-based antioxidant, a phosphorus-based processing stabilizer, or a metal deactivator can be used. As the antioxidant, a mixture of these may be used, and it is preferable to contain at least the hindered phenol-based antioxidant and the phosphorus-based processing stabilizer.

A predetermined amount of the antioxidant is contained in the resin composition such that an oxidation induction time at 230°C to be described later is equal to or longer than a predetermined time. For example, the antioxidant is preferably contained in the resin composition in an amount of 0.1% or more and 2.0% or less. When the antioxidant is contained in the resin composition, oxidative degradation of the thermoplastic resin is prevented, and the oxidation induction time is longer. When the metal deactivator is used as the antioxidant, a catalyst and the like contained in the thermoplastic resin can be deactivated. When the recycled resin is used as the thermoplastic resin, the recycled resin may contain the antioxidant. When such a recycled resin is used, an addition amount of the antioxidant is preferably adjusted such that a content of the antioxidant in the resin composition is set to a predetermined value.

An index for evaluating thermal stability of the resin composition includes the oxidation induction time. The oxidation induction time refers to a time from first contact of a sample with oxygen to the start of exothermic decomposition at an isothermal temperature. The oxidation induction time relatively indicates stability of the sample against oxidation, and a longer oxidation induction time leads to higher antioxidant properties and higher durability. The oxidation induction time can be measured using a thermal analysis method such as differential thermal analysis (DTA) or differential scanning calorimetry (DSC) as described in JIS K 6774.

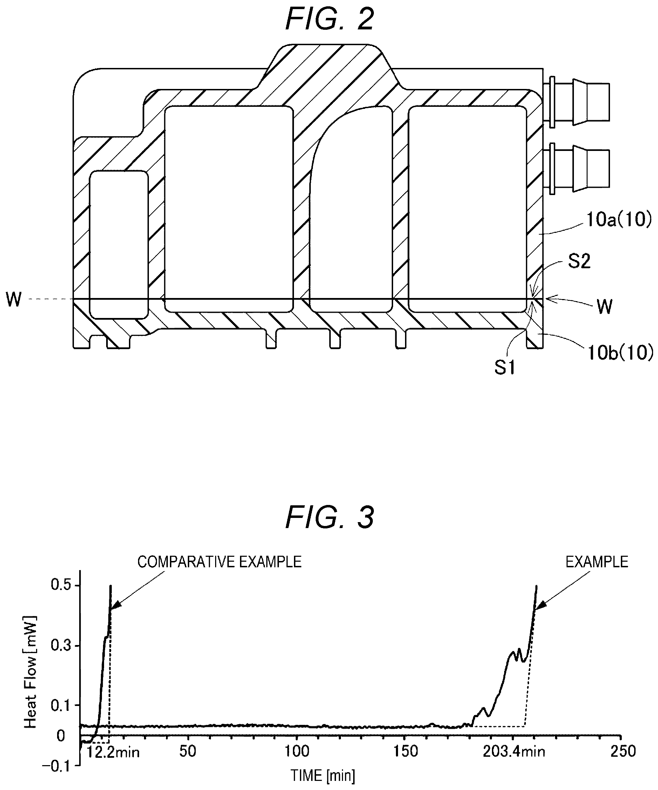

The oxidation induction time at 230°C of the resin composition disclosed here is 30 minutes or longer, and preferably 30 minutes or longer and 200 minutes or shorter. That is, even when exposed to an oxidizing atmosphere at 230°C, the resin composition disclosed here is thermally stable until the oxidation induction time of 30 minutes or longer (preferably 30 minutes or longer and 200 minutes or shorter) elapses. Therefore, even when the resin composition disclosed here is subjected to a thermal load for a certain period of time (for example, 30 minutes) in a high-temperature (for example, about 230°C) environment, strength or a creep life thereof is less likely to decrease. Therefore, the resin composition disclosed here can be suitably used as a material for a component to be subjected to a thermal load applying treatment in a high-temperature environment around 230°C. Specifically, the resin composition disclosed here can be suitably used as a material for a part or all of a component to be subjected to a thermal welding treatment. Examples of such a component include an in-vehicle component. When the resin composition disclosed here is used as a material for an in-vehicle component, even when the thermal welding treatment is performed during the production, a decrease in strength or creep life of a welded portion and a joining portion W between welded portions (see FIG. 2) is prevented, and high durability performance (for example, 100,000 km in 5 years) can be attained. That is, the resin composition disclosed here can be particularly suitably used as a material for an in-vehicle molded product having a joining portion in which welded portions of members using the resin composition are thermally welded to each other.

As a result of intensive studies, the inventors of the present application have found through experiments that a resin composition having an oxidation induction time of 30 minutes or longer at 230°C can be attained even when only the recycled resin is used as the thermoplastic resin. That is, even when only the recycled resin is used as the thermoplastic resin, the resin composition disclosed here can be suitably used as a material for an in-vehicle molded product.

### Molded Body

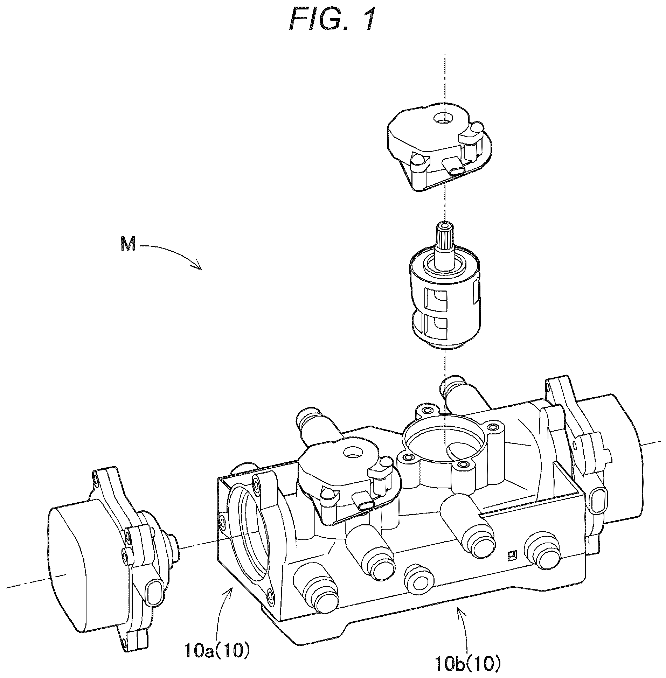

Next, a molded body 1 disclosed here will be described with reference to FIG. 1. In the present embodiment, the molded body 1 will be described as a housing 10 of an in-vehicle cooling module M. The cooling module M includes a pump, a valve, or a cooling liquid flow path for cooling devices such as a motor or a battery of an automobile.

As illustrated in FIG. 1 or 2, the housing 10 includes an upper housing 10a (an example of a molded member) having a first joining portion S1 (an example of a welded portion) and a lower housing 10b (an example of the molded member) having a second joining portion S2 (an example of the welded portion). Each of the upper housing 10a and the lower housing 10b is a housing having an accommodation space inside for accommodating a cooling liquid flow path, a valve, and the like. In the present embodiment, each of the upper housing 10a having the first joining portion S1 and the lower housing 10b having the second joining portion S2 is formed of the resin composition disclosed here. Each of the upper housing 10a and the lower housing 10b is preferably formed into a predetermined shape by injection molding or the like.

The housing 10 is formed by thermally welding the first joining portion S1 and the second joining portion S2 at the joining portion W. The entire housing 10 may be formed of the resin composition, or only the first joining portion S1 and the second joining portion S2 of the housing 10 may be formed of the resin composition. Since the joining portion W between the first joining portion S1 and the second joining portion S2 is formed of the resin composition disclosed here, even when a thermal load due to thermal welding is generated in the first joining portion S1 and the second joining portion S2, a decrease in strength or creep life of the first joining portion S1, the second joining portion S2, and the joining portion W is prevented. Therefore, degradation of the housing 10 can be prevented, and the housing 10 having high durability performance can be attained.

### Method for Producing Molded Body

A method for producing the housing 10 includes a molding step of molding the upper housing 10a having the first joining portion S1 and the lower housing 10b having the second joining portion S2, and a welding step of thermally welding the first joining portion S1 and the second joining portion S2 to each other. The molding step is preferably performed using a known method. In the present embodiment, the upper housing 10a having the first joining portion S1 and the lower housing 10b having the second joining portion S2 are formed using the resin composition disclosed here.

After the upper housing 10a and the lower housing 10b are formed in the molding step, the first joining portion S1 and the second joining portion S2 are thermally welded to each other in the welding step. In the present embodiment, the welding step is performed by hot plate welding, IR welding, or vibration welding. For example, IR welding can be performed by irradiating and heating the first joining portion S1 and the second joining portion S2 with IR light for 5 seconds to 30 seconds such that a surface temperature is 175°C to 250°C. Therefore, when the oxidation induction time at 230°C of the resin composition constituting the first joining portion S1 and the second joining portion S2 is 30 minutes or longer, the decrease in strength or creep life of the first joining portion S1, the second joining portion S2, and the joining portion W during the thermal welding is prevented. Therefore, it is possible to produce the housing 10 having durability with prevented degradation.

### Examples

Hereinafter, Examples disclosed here will be described, but this disclosure is not limited to the description of these Examples.

### Example

A resin composition according to Example was obtained by adding a glass fiber and an antioxidant to a polypropylene as a recycled resin made of a waste material of a food container or the like. Addition was made such that a content of the glass fiber was 30% and a content of the antioxidant was 0.3% in the resin composition. A hindered phenol-based antioxidant, a phosphorus-based processing stabilizer, and a metal deactivator were added as the antioxidant.

### Comparative Example

A resin composition according to Comparative Example was obtained by adding a glass fiber and an antioxidant to a polypropylene as a virgin resin. Addition was made such that a content of the glass fiber was 30% and a content of the antioxidant was 0.05% in the resin composition.

For each of Example and Comparative Example, oxidation induction times at 210°C, 230°C, and 250°C were obtained by differential scanning calorimetry (DSC). In the differential scanning calorimetry, a sample was heated to a predetermined temperature under a nitrogen atmosphere, then the atmosphere was switched from the nitrogen atmosphere to an air atmosphere, and a time until an exothermic peak was generated due to oxygen absorption of the sample from a switch time was measured. A time when a heat flow of the sample reached 0.5 mW was defined as the time when the exothermic peak was generated.

FIGS. 3 to 5 illustrate results of the differential scanning calorimetry. In Example, the oxidation induction time at 210°C was 203.4 minutes, the oxidation induction time at 230°C was 40.0 minutes, and the oxidation induction time at 250°C was 1.6 minutes. Therefore, it can be seen that the resin composition according to Example is less likely to degrade even when subjected to a thermal load at 230°C. On the other hand, for the resin composition according to Comparative Example, the oxidation induction time at 210°C was 12.2 minutes, the oxidation induction time at 230°C was 1.6 minutes, and the oxidation induction time at 250°C was 0.4 minutes. Therefore, it can be seen that the resin composition according to Comparative Example is likely to degrade in a high-temperature environment.

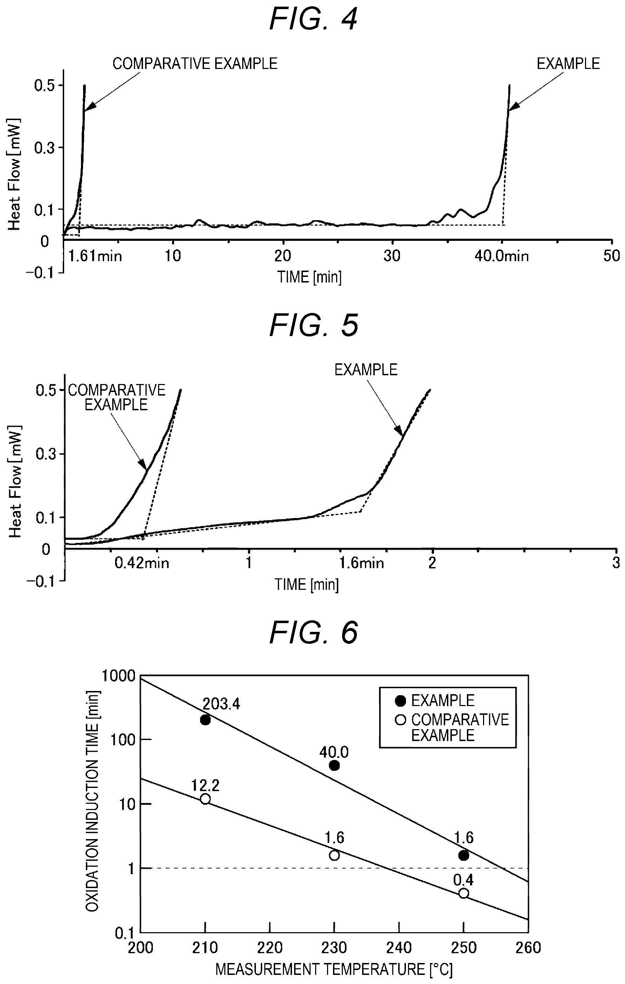

FIG. 6 is a graph plotting a logarithm of the oxidation induction time with respect to a test temperature. As illustrated in FIG. 6, there is a correlation between the test temperature and the oxidation induction time in the same material, and an approximate formula can be calculated based on a value of the oxidation induction time at each test temperature. Therefore, the resin composition disclosed here also includes a resin composition having an oxidation induction time at 230°C of 30 minutes or longer and 200 minutes or shorter, which is calculated using the approximate formula.

A molded member having a welded portion was formed using the resin composition according to Example, and IR welding was performed on welded portions to obtain a molded body. IR welding was performed by irradiating and heating the welded portions with IR light for 20 seconds such that a surface temperature of the welded portions was 230°C. A molded body was obtained in the same manner using the resin composition according to Comparative Example.

Each molded body according to Example and Comparative Example was subjected to a pressure resistance and durability test at 80°C. The pressure resistance and durability test was performed by maintaining a pressure as an internal pressure of 300 kPa. Since a durability time of the molded body according to Example was 340 hours and a durability time of the molded body according to Comparative Example was 100 hours, it was found that the welded portion made of the resin composition according to Example exhibited high durability.

In the embodiments described above, the following configurations are conceivable.
(1) A resin composition for welding contains a thermoplastic resin containing polypropylene, a glass fiber, and an antioxidant, in which the resin composition has an oxidation induction time of 30 minutes or longer at 230°C.

According to this configuration, strength of the resin composition is improved by the glass fiber, and oxidative degradation of the resin composition for welding is prevented by the antioxidant. Since the oxidation induction time at 230°C is 30 minutes or longer, even when the resin composition for welding is placed in a high-temperature environment and subjected to a thermal load, the strength or a creep life thereof is less likely to decrease. Therefore, a resin composition for welding that is less likely to degrade even when subjected to a thermal load can be provided.

(2) In the resin composition for welding according to (1), the thermoplastic resin may be a recycled material obtained from a waste material.

According to this configuration, since the resin composition for welding can be obtained by material recycling, a production cost can be reduced, and an environmental load can be reduced.

(3) In a molded body (the housing 10) formed by thermally welding welded portions of two or more molded members (the upper housing 10a, the lower housing 10b) having the welded portions (the first joining portion S1, the second joining portion S2) to each other, the welded portions may be made of the resin composition for welding according to (1) or (2).

According to this configuration, since the welded portions (the first joining portion S1, the second joining portion S2) of the molded body (the housing 10) formed by thermal welding are made of the resin composition for welding, oxidative degradation due to the thermal welding is less likely to occur, and durability performance of the molded body (the housing 10) can be improved.

(4) A method for producing the molded body (the housing 10) according to (3) includes a molding step of molding the molded members (the upper housing 10a, the lower housing 10b) having the welded portions (the first joining portion S1, the second joining portion S2), and a welding step of thermally welding the welded portions (the first joining portion S1, the second joining portion S2) of the molded members (the upper housing 10a, the lower housing 10b) to each other, in which the welding step may be performed by hot plate welding, IR welding, or vibration welding.

According to this configuration, since the welding step can be performed by hot plate welding, IR welding, or vibration welding, the molded body (the housing 10) having high durability can be obtained using a simple method by thermally welding the welded portions (the first joining portion S1, the second joining portion S2) of the molded members (the upper housing 10a, the lower housing 10b) having the welded portions to each other.

### Other Embodiments

(a) In the above embodiments, an embodiment in which the entire upper housing 10a and lower housing 10b are formed of the resin composition disclosed here has been described, but this disclosure is not limited to such an embodiment. The first joining portion S1 of the upper housing 10a and the second joining portion S2 of the lower housing 10b are formed of the resin composition, and other portions in the housings 10a and 10b may be formed of a material other than the resin composition disclosed here. That is, it is sufficient that each welded portion in the upper housing 10a and the lower housing 10b is formed of the resin composition disclosed here.
(b) In the above embodiments, an embodiment in which the welding step is performed by any method among the hot plate welding, the IR welding, and the vibration welding in the production of the housing 10 has been described, but this disclosure is not limited to such an embodiment. An embodiment in which the welding step is performed by a method other than the above may be adopted.

### Industrial Applicability

This disclosure can be used for a resin composition, which contains a thermoplastic resin containing a polypropylene, a glass fiber, and an antioxidant, a molded body containing the resin composition, and a method for producing the molded body.

## Claims

1. A resin composition for welding comprising:
a thermoplastic resin containing a polypropylene;
a glass fiber; and
an antioxidant, wherein
the resin composition has an oxidation induction time of 30 minutes or longer at 230°C.

2. The resin composition for welding according to claim 1, wherein
the thermoplastic resin is a recycled material obtained from a waste material.

3. A molded body (1) formed by thermally welding welded portions (S1, S2) of two or more molded members (10a, 10b) having the welded portions to each other, wherein
the welded portions contain the resin composition for welding according to claim 1 or 2.

4. A method for producing a molded body, which is a method for producing the molded body (1) according to claim 3, the method comprising:
a molding step of molding the molded members having the welded portions; and
a welding step of thermally welding the welded portions of the molded members to each other, wherein
the welding step is performed by hot plate welding, IR welding, or vibration welding.
